# FASCICULE DE BREVET EUROPEEN

(11) **EP 0 395 557 B1**
(45) Date de publication et mention de la délivrance du brevet: **01.09.1993**
(21) Numéro de dépôt: 90460021.0
(22) Date de dépôt: 26.04.1990
(51) Int. Cl.: A61C 3/025

(54) **Appareil de soins dentaires**
Vorrichtung für die Zahnpflege
Device for dental care

(30) Priorité: 28.04.1989 FR 8905956
(43) Date de publication de la demande: 31.10.1990
(73) Titulaire: De Farcy, Bertrand, F-49400 Saumur (FR)
(72) Inventeur: De Farcy, Bertrand, F-49400 Saumur (FR)
(74) Mandataire: Le Faou, Daniel

(56) Documents cités:
- EP-A- 0 097 288
- US-A- 3 718 973

## Description

La présente invention concerne un appareil de soins dentaires, et plus précisémment un appareil comportant un instrument à main adapté pour réaliser une opération de sablage par projection d'une poudre sur les dents, combinée à une opération de rinçage par projection d'un liquide.

Les appareils de ce type sont déjà connus et utilisés dans les cabinets dentaires et stomatologiques ; l'instrument à main, manipulé par le praticien est adapté pour diriger sur les dents à traiter un double flux de fluides, à savoir un premier flux porteur de particules de poudre, en général de bicarbonate de soude, qui se trouvent en suspension dans de l'air comprimé, et un second flux liquide, en l'occurence d'eau sous pression ; des appareils de ce genre sont décrit notamment les documents FR-A-2 567 747, 2 528 693 et 2 572 925.

L'instrument à main possède une canule intra-buccale conformée pour projeter les deux jets sur les dents du patient, en particulier à la base des dents, au niveau du sillon sous-gingival, afin d'éliminer la plaque bactérienne, particulièrement dangereuse pour le parodonte. Dans un mode de réalisation connu, la canule présente un conduit central servant à la projection du bicarbonate, et un conduit annulaire entourant le conduit central pour la projection d'eau (voir FR-A-2 575 062).

Un tel appareil est extrêmement intéressant sur le plan de l'hygiène, du fait qu'aucune pièce de l'instrument ne vient en contact avec les dents ou la bouche du patient au cours de traitement, ce qui réduit donc considérablement les risques de contamination bactérienne ; il est en outre très efficace pour la prophylaxie des infections du parodonte, car le jet d'air comprimé qui transporte les particules de poudre soulève légèrement la languette gingivale, ce qui permet un sablage et un rinçage corrects et étendus de la plaque bactérienne.

Un inconvénient de ce type d'appareil consiste dans le fait qu'il est nécessaire de disposer de deux sources extérieures différentes d'approvisionnement en fluide, l'une en air comprimé et l'autre en eau sous pression. Cette contrainte est sans importance lorsque l'appareil est utilisé dans un cabinet dentaire ou stomatologique, du fait que la console de soins d'un tel cabinet est traditionnellement déjà équipée de ces deux sources d'approvisionnement, ainsi que des canalisations distributrices correspondantes, indispensables au fonctionnement des différents instruments et outils traditionnels pour les soins dentaires.

En revanche, cette contrainte est un inconvénient très important dans la mesure où elle interdit pratiquement tout usage domestique, les particuliers ne possèdant généralement pas un conduit d'arrivée d'air comprimé dans leur salle de bain.

Un autre inconvénient des appareils connus se situe dans la fait qu'il n'est pas possible d'utiliser pour le rinçage un autre liquide que de l'eau, alors qu'il serait parfois utile d'utiliser des liquides ayant une action antiseptique ou médicamenteuse.

L'invention vise à résoudre ces problèmes en proposant, grâce à des modifications mineures et peu coûteuses, de perfectionner l'appareil connu pour en faire un appareil destiné à un usage domestique, facile à utiliser, dans lequel il est possible d'employer pour le rinçage tout liquide approprié, même de consistance sirupeuse.

A cet effet, l'appareil selon l'invention, qui comme les appareils antérieurs connus comporte un instrument à main adapté pour réaliser une opération de sablage par projection d'une poudre sur les dents, combinée à une opération de rinçage par projection d'un liquide, la poudre étant contenue dans un premier récipient dans lequel elle est mise en suspension dans de l'air comprimé, et des moyens étant prévus pour amener le mélange d'air et de poudre audit instrument à main, tandis que d'autres moyens sont prévus pour amener le liquide à ce dernier, est caractérisé en ce qu'il comporte un compresseur portable apte à fournir de l'air comprimé, d'une part audit premier récipient, d'autre part à un second récipient contenant le liquide, afin de mettre ce récipient sous pression et d'en chasser le liquide vers l'instrument à main.

Par ailleurs, selon un certain nombre de caractéristiques avantageuses, mais non limitatives, de l'invention :
- l'appareil comporte une valve à trois voies montée à la sortie du compresseur et pouvant sélectivement être amenée dans une position dans laquelle le compresseur fournit de l'air comprimé à la fois aux deux récipients et dans une position où il fournit de l'air comprimé seulement au second récipient ;
- l'instrument à main est muni d'une canule de projection intra-buccale qui est formée de deux conduits coaxiaux, à savoir un conduit central de projection du mélange d'air comprimé et de poudre et un conduit annulaire, entourant ledit conduit central, pour la projection du liquide ;
- l'appareil comporte un filtre déshumidificateur qui est monté à la sortie du compresseur ;
- l'appareil est équipé d'un dispositif de stérilisation d'une brosse à dents, celui-ci consistant en un générateur d'ozone branché sur un récipient destiné à recevoir la brosse à dents, ce générateur étant alimenté en air par ledit compresseur ;
- ce dispositif de stérilisation comprend un générateur d'ultra-sons ;
- l'ensemble des éléments constitutifs de l'appareil, à l'exception de l'instrument à main, sont logés dans un coffret autonome et portable.

D'autres caractéristiques et avantages de l'invention apparaîtront de la description et des dessins annexés qui en présentent deux modes de réalisation préférentiels.

Sur ces dessins :
- la figure 1 est une vue générale schématique du premier mode de réalisation ;
- les figures 2 et 3 sont des vues similaires représentant l'appareil respectivement au cours des opérations de sablage et de rinçage ;
- la figure 4 est une vue schématique d'un second mode de réalisation de l'appareil, équipé d'un dispositif de stérilisation pour une brosse à dent.

Sur les figures, on a désigné par la référence 1 un compresseur électrique, adapté pour être branché sur le secteur (240 V alternatifs) au moyen d'un câble 100. Le compresseur 1 fournit de l'air comprimé à une pression de l'ordre de 2 à 2,5 bars, avec un débit d'au moins 15 à 20 litres à la minute. Sur le conduit de sortie 11 du compresseur est monté un filtre déshumidificateur 10, de type connu, apte à capter les petites gouttelettes d'eau pouvant se trouver en suspension dans l'air fourni par le compresseur, de sorte que l'air quittant ce filtre 10 par un conduit 12 est parfaitement sec.

Sur le conduit 12 est montée une vanne à trois voies 2. La première sortie 20 de la vanne 2 est branchée, de manière étanche, sur un premier récipient 3, dans lequel il débouche ; le récipient 3 contient une certaine quantité de poudre destinée au sablage, telle que du bicarbonate de soude. On notera que le conduit 20 pénètre assez profondément à l'intérieur du récipient 3. Sur ce même récipient est branché, également de manière étanche, un autre conduit 30, qui pénètre moins profondément dans le récipient. Ce conduit alimente un instrument à main 5 qui sera décrit plus loin.

La seconde sortie 22 de la valve à trois voies 2 alimente, de manière similaire au conduit 20, un second récipient 4 qui contient un liquide de rinçage 400 ; de même, sur le récipient 4 est branché un conduit de sortie 40, qui alimente l'instrument à main 5. On notera toutefois que le conduit d'arrivée 22 pénètre peu profondément dans le récipient 4 de manière à ne pas venir en contact avec le liquide 400 ; au contraire, le conduit de sortie 40 plonge dans ce liquide.

Le troisième conduit de sortie 21 de la vanne 2 est branché sur le conduit 30 à la sortie du premier récipient 3.

L'ensemble des constituants de l'appareil qui vient d'être décrit est logé dans un coffret désigné C et symbolisé par un rectangle en traits interrompus, ce coffret étant aisément transportable et autonome.

Sur les figures, l'instrument à main 5 est représenté à une échelle plus grande que les constituants situés dans le coffret C, ceci pour améliorer la compréhension du dessin.

L'instrument 5 comporte un manche 50 et une canule intra-buccale 51, dont la forme permet d'accèder à l'intérieur de la bouche et de diriger les deux flux de traitement à la base des dents.

Comme cela est connu en soi, l'un des conduits 31 constitutif de la canule 51 est un petit conduit central, lequel est branché sur le conduit 30 relié au premier récipient 3 ; l'autre conduit 41 est un conduit annulaire, entourant le conduit 31, sur lequel est branché le conduit 40 qui est relié au second récipient 4. Les conduits 30 et 40 sont naturellement des conduits souples qui autorisent les libres déplacements de l'instrument ; au contraire les conduits 31, 41 constitutifs de la canule sont rigides.

Nous allons maintenant expliquer de quelle manière cet appareil est utilisé, tout d'abord pour effectuer une opération de sablage et ensuite pour réaliser une opération de rinçage des dents.

Pour mettre en marche l'appareil, il suffit de brancher électriquement le compresseur 1 sur le réseau électrique alimentant l'habitation de l'utilisateur. Celui-ci a veillé à approvisionner chacun des récipients 3 et 4 respectivement en bicarbonate de soude et en liquide de rinçage, ce liquide étant par exemple de l'eau ordinaire, de l'eau distillée, ou une solution aqueuse d'un produit antiseptique ou médicamenteux.

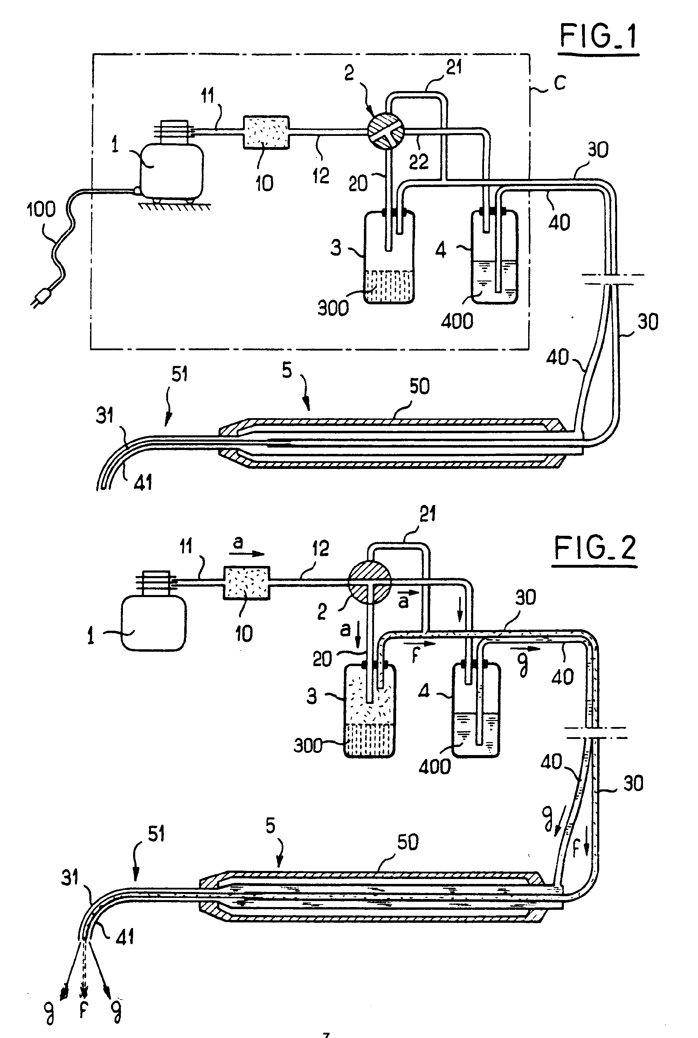

En vue de réaliser le sablage, il place la valve à trois voies 2 dans la position de la figure 2, et met le compresseur en marche au moyen d'un interrupteur approprié (non représenté), de préférence situé sur le manche 50. En tenant l'instrument 5 d'une main, il introduit la canule 51 dans la bouche (entrouverte) et amène l'extrémité de cette canule à proximité de la zone à traiter, en la dirigeant vers la base des dents.

Le compresseur fournit de l'air comprimé qui, après déshumidification par le filtre 10, arrive dans le récipient 3 où il provoque l'agitation et la mise en suspension des particules de bicarbonate 300 se trouvant dans le récipient. Dans le même temps, de l'air comprimé arrive également dans le récipient 4, au-dessus du liquide 400. L'arrivée de l'air comprimé dans les deux récipients 3, 4 est figuré par les flèches a à la figure 2. Par suite de la surpression règnant dans les récipients, l'air comprimé chargé de particules de poudre de bicarbonate quitte le récipient 3 et est acheminé par le conduit 30 jusqu'à l'instrument à main 5 où il pénètre dans l'élément central de canule 31 pour être projeté à l'extérieur de celle-ci, sur la zone dentaire à traiter ; le flux d'air chargé de particules de poudre dans l'appareil est figuré par les flèches f à la figure 2. Dans le même temps la mise sous pression par l'air comprimé du récipient 4 chasse le liquide qui s'y trouve, lequel est acheminé par le conduit 40 jusqu'à l'instrument à main 5 ; dans cet instrument, il pénètre dans le conduit périphérique 41 de la canule et est projeté sur la zone à traiter suivant un jet conique entourant le jet central de particules de poudre (flèches g).

En frappant la dent, par effet de sablage, les particules de bicarbonate décollent la plaque bactérienne qui s'y trouve. Le bicarbonate est instantanément dissout par le liquide de rinçage, évitant ainsi la formation d'un nuage de poudre, et provoquant un lavage et un rinçage de la dent. Bien entendu, de temps en temps, l'utilisateur recrache le mélange constitué par la solution de la poudre de sablage dans le liquide de rinçage.

Comme déjà dit plus haut, l'air comprimé qui sert d'agent de transport pour la poudre de sablage, a pour effet de soulever la languette gingivale à la base de la dent, ce qui permet au produit de sablage et de rinçage d'accéder correctement à la base de la dent ou se trouve généralement la plaque bactérienne la plus dangereuse pour le parondonte.

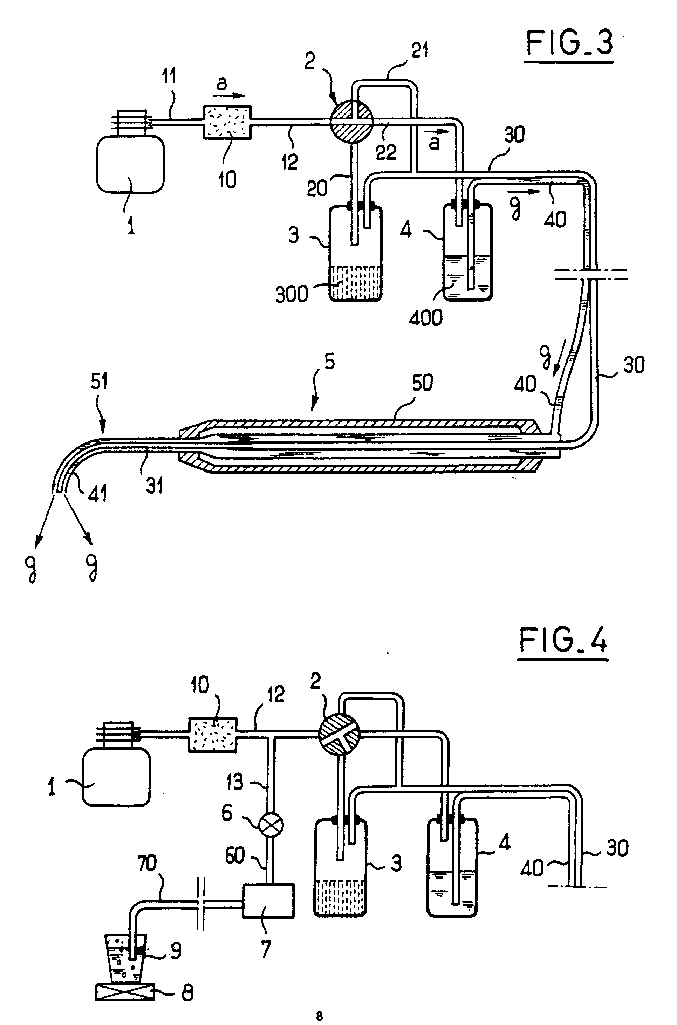

En plaçant la valve dans la position de la figure 3, l'utilisateur peut effectuer un simple rinçage des dents, notamment en vue d'éliminer les débris solides pouvant se trouver dans les interstices interdentaires, l'appareil fonctionnant alors comme un appareil hydropulseur traditionnel mais sous une pression plus faible, moins agressive pour la gencive. Dans ce cas, l'air comprimé qui arrive dans le récipient 3 n'a pas d'autre effet que celui de provoquer une agitation des particules de poudre qui s'y trouvent, ces particules ne pouvant s'en échapper (conduit 20 fermé). Cependant, cet air comprimé chasse les particules se trouvant dans le conduit 30, réalisant un nettoyage efficace de celui-ci, et le rendant disponible pour une utilisation ultérieure. En effet, si des particules de bicarbonate restaient dans les conduits en-dehors de la période d'utilisation de l'appareil, il risquerait d'absorber de l'humidité et, par formation d'un amalgame, d'obstruer ces conduits.

L'opération de rinçage (flèches g) se fait de la même manière qu'au cours de l'opération de sablage-rinçage décrite en référence à la figure 2 ; la canule 51 émet un seul jet de traitement, en l'occurence un jet liquide conique.

La présence du filtre 10 dans le circuit permet naturellement de préserver de l'humidité le bicarbonate 300 qui, comme déjà dit, est très sensible à l'eau.

Du fait que le liquide est chassé du second récipient 4 par de l'air comprimé (au lieu d'être transporté par une pompe) il est possible d'utiliser des liquides ayant des consistances variées, plus ou moins liquides, même visqueuses ou sirupeuses, ce qui élargit donc l'éventail des produits qui peuvent être employés.

Dans une variante, le récipient de bicarbonate pourrait consister en une cartouche amovible logée à l'intérieur du manche 50 de l'instrument à main 5, et rechargeable ou remplaçable lorsqu'elle est vide. Une telle solution, qui présente en particulier l'avantage que le bicarbonate ne circule que dans la canule intra-buccale, et donc résoud les problèmes d'obstruction des conduits, est réalisable en pratique de manière simple par des moyens dont la conception se trouve être à la portée de l'homme du métier.

Dans le second mode de réalisation représenté à la figure 4, l'ensemble des composants fournissant la poudre et le liquide de rinçage à l'instrument à main (lequel n'a pas été à nouveau représenté, pour ne pas alourdir inutilement cette figure) sont identiques à ceux du premier mode de réalisation. Dans cette variante, le conduit 12 de sortie du filtre 10 présente une dérivation 13 ; celle-ci alimente en air comprimé, via une valve ordinaire 6 (robinet) un dispositif électronique 7 de fabrication d'ozone à partir de l'air ambiant, de type connu en soi. Le dispositif 7 alimente en ozone, par un conduit 70 un récipient 9 qui est porté par un support 8 faisant partie de l'appareil ; ce support est par exemple porté par le coffret C. Le récipient 9 peut consister simplement en un verre de stérilisation destiné à recevoir la brosse à dents de l'utilisateur. Ainsi, durant le traitement de sablage et/ou rinçage, l'air comprimé fourni par le compresseur 1 est envoyé, si le robinet 6 est ouvert, au dispositif 7 qui produit de l'ozone à l'intérieur du récipient 9, réalisant ainsi une stérilisation de la brosse à dents par destruction de certains germes microbiens pouvant se trouver logés entre les poils de cette brosse. Le dispositif support 8, dans une variante, peut consister en un générateur d'ultrasons de type connu, qui provoque une stérilisation complémentaire du liquide contenu dans le récipient 9 et de la brosse à dents qui s'y trouve. Dans ce mode de réalisation, l'appareil constitue donc non seulement un appareil de soins dentaires par sablage et rinçage des dents, mais aussi un poste de stérilisation de la brosse à dents, de sorte que le brossage des dents par l'utilisateur complète efficacement le traitement.

Dans une variante, il peut être avantageux de prévoir une interconnexion fonctionnelle entre la valve 2 et la commande marche-arrêt du compresseur, de telle façon que l'arrêt de celui-ci ne puisse être obtenu qu'après la purge du conduit 30.

Il peut être envisagé de chauffer légèrement l'air quittant le compresseur, par exemple au moyen d'une résistance chauffante logée dans un manchon qui serait prévu sur le conduit 12. Ceci aurait pour effet de rendre le jet de sablage plus agréable, et aussi, de diminuer l'effet néfaste de l'humidité contenue dans l'air sur la poudre de bicarbonate, très hydrophile.

## Revendications

1. Appareil de soins dentaires, comportant un instrument à main (5) adapté pour réaliser une opération de sablage par projection d'une poudre (300) sur les dents, combinée à une opération de rinçage par projection d'un liquide (400), la poudre (300) étant contenue dans un premier récipient (3) dans lequel elle est mise en suspension dans de l'air comprimé, et des moyens étant prévus pour amener le mélange d'air et de poudre audit instrument à main (5), tandis que d'autres moyens sont prévus pour amener le liquide (400) à ce dernier, caractérisé en ce qu'il comporte un compresseur portable (1) apte à fournir de l'air comprimé, d'une part audit premier récipient (3), d'autre part a un second récipient (4) contenant le liquide (400), afin de mettre ce récipient sous pression, et d'en chasser le liquide (400) vers ledit instrument à main (5).

2. Appareil de soins dentaires selon la revendication 1, caractérisé en ce qu'il comporte une valve à trois voies (2) montée à la sortie du compresseur (1) et pouvant sélectivement être amenée dans une position dans laquelle le compresseur fournit de l'air comprimé aux deux récipients (3, 4) et dans une position où il fournit de l'air comprimé seulement au second récipient (4).

3. Appareil de soins dentaires selon l'une des revendications 1 ou 2, caractérisé en ce que l'instrument à main (5) est muni d'une canule de projection intra-buccale formée de deux conduits coaxiaux, à savoir un conduit central (31) de projection du mélange d'air comprimé et de poudre et un conduit annulaire (41), entourant le conduit central (31), pour la projection du liquide.

4. Appareil de soins dentaires selon l'une des revendications 1 à 3, caractérisé en ce qu'il comporte un filtre déshumidificateur (10) monté à la sortie du compresseur.

5. Appareil de soins dentaires selon l'une des revendications 1 à 4, caractérisé en ce qu'il est équipé d'un dispositif de stérilisation d'une brosse à dents, celui-ci consistant en un générateur d'ozone (7) branché sur un récipient (9) destiné à recevoir la brosse à dents, ce générateur étant alimenté en air par ledit compresseur (1).

6. Appareil de soins dentaires selon la revendication 5, caractérisé en ce que ledit dispositif de stérilisation comprend un générateur d'ultrasons (8).

7. Appareil de soins dentaires selon l'une des revendications 1 à 6, caractérisé en ce que le récipient contenant la poudre est logé à l'intérieur du manche (50) de l'instrument à main (5).

8. Appareil de soins dentaires selon l'une des revendications 1 à 7, caractérisé en ce que l'ensemble de ses éléments constitutifs (1, 2, 3, 4, 6, 7), à l'exception de l'instrument a main, sont logés dans un coffret (C) autonome et portable.

## Patentansprüche

1. Gerät für die Zahnpflege mit einem Handinstrument (5) zum Durchführen einer Pulverbestrahlung der Zähne mit einem Pulver (300) kombiniert mit einer Spülung durch Bestrahlen mit einer Flüssigkeit (400), wobei das Pulver in einem ersten Behälter (3) enthalten ist, in welchem das Pulver in Druckluft suspendiert ist, und mit Mitteln zum Fördern des Luft-Pulvergemisches zum Handinstrument (5), wobei weitere Mittel zum Fördern der Flüssigkeit (400) zum Handinstrument vorgesehen sind, dadurch **gekennzeichnet**, daß ein tragbarer Kompressor (1) zum Speisen von Druckluft einerseits zu dem besagten ersten Behälter (3) und andererseits zu einem zweiten Behälter (4) enthaltend die Flüssigkeit (400) vorgesehen ist, um diesen Behälter unter Druck zu setzen und die Flüssigkeit (400) zu dem besagten Handinstrument (5) auszutreiben.

2. Gerät nach Anspruch 1, dadurch **gekennzeichnet,** daß es ein Dreiwege-Ventil (2) aufweist, welches am Ausgang des Kompressors (1) angeordnet ist und wahlweise in eine Position gebracht werden kann, in welcher der Kompressor Druckluft zu den beiden Behältern (3, 4) speist, sowie in eine Position, in welcher er Druckluft ausschließlich zu dem zweiten Behälter (4) speist.

3. Gerät nach Anspruch 1 oder 2, dadurch **gekenn****zeichnet,** daß das Handinstrument (5) mit einer intra-oral einzuführenden Kanüle versehen ist, welche zwei koaxiale Leitungen, nämlich eine zentrale Leitung (31) zum Speisen des Druckluft-Pulvergemisches und eine die zentrale Leitung (31) umgebende Ringleitung (41) zum Speisen von Flüssigkeit, aufweist.

4. Gerät nach einem der Ansprüche 1 bis 3, dadurch **gekennzeichnet**, daß es einen Entfeuchtungs-Filter (10) aufweist, der am Ausgang des Kompressors angeordnet ist.

5. Gerät nach einem der Ansprüche 1 bis 4, dadurch **gekennzeichnet**, daß es mit einer Sterilisiervorrichtung für eine Zahnbürste ausgestattet ist, welche einen Ozongenerator (7) mit einer Zweigleitung zu einem Behälter (9) für eine Zahnbürste aufweist, wobei der Ozongenerator mit Luft von dem besagten Kompressor (1) versorgt wird.

6. Gerät nach Anspruch 5, dadurch **gekennzeichnet**, daß die Sterilisiervorrichtung einen Ultraschallgenerator (8) umfaßt.

7. Gerät nach einem der Ansprüche 1 bis 6, dadurch **gekennzeichnet**, daß der Behälter für das Pulver innerhalb der Fassung (50) des Handgerätes (5) plaziert ist.

8. Gerät nach einem der Ansprüche 1 bis 7, dadurch **gekennzeichnet**, daß die Gesamtheit seiner Bestandteile (1, 2, 3, 4, 6, 7) mit Ausnahme des Handgerätes in einem autonomen und tragbaren Koffer (C) aufgenommen sind.

## Claims

1. A dental care apparatus, comprising a hand instrument (5) adapted to perform a sandblasting operation by projecting a powder (300) onto the teeth, combined with a rinsing operation by projecting a liquid (400), the powder (300) being contained in a first receptacle (3) in which it is suspended in compressed air, and means being provided for conveying the mixture of air and powder to said hand instrument (5), whereas other means are provided for conveying the liquid (400) to the latter, characterized in that it comprises a portable compressor (1) capable of supplying compressed air, on the one hand, to said first receptacle (3) and, on the other hand, to a second receptacle (4) containing the liquid (400), so as to pressurize this receptacle and to drive out the liquid (400) therefrom toward said hand instrument (5).

2. The dental care apparatus as claimed in claim 1, characterized in that it comprises a three-way valve (2) mounted at the outlet of the compressor (1) and capable of being brought selectively to a position in which the compressor supplies compressed air to the two receptacles (3, 4) and to a position where it supplies compressed air only to the second receptacle (4).

3. The dental care apparatus as claimed in one of claims 1 or 2, characterized in that the hand instrument (5) is provided with an intrabuccal projection cannula composed of two coaxial conduits, namely a central conduit (31) for projecting a mixture of compressed air and powder and an annular conduit (41), surrounding the central conduit (31), for projecting the liquid.

4. The dental care apparatus as claimed in one of claims 1 to 3, characterized in that it comprises a dehumidifying filter (10) mounted at the outlet of the compressor.

5. The dental care apparatus as claimed in one of claims 1 to 4, characterized in that it is equipped with a device for sterilizing a toothbrush, said device consisting of an ozone generator (7) connected to a receptacle (9) intended to receive the toothbrush, this generetor being fed with air by said compressor (1).

6. The dental care apparatus as claimed in claim 5, characterized in that said sterilizing device includes an ultrasound generator (8).

7. The dental care apparatus as claimed in one of claims 1 to 6, characterized in that the receptacle containing the powder is accomodated inside the handle (50) of the hand instrument (5).

8. The dental care apparatus as claimed in one of claims 1 to 7, characterized in that all of its constituent elements (1, 2, 3, 4, 6, 7), with the exception of the hand instrument, are accommodated in a small self-contained portable box (C).
